# EUROPÄISCHE PATENTSCHRIFT

(11) **EP 1 338 763 B1**
(45) Veröffentlichungstag und Bekanntmachung des Hinweises auf die Patenterteilung: **18.08.2004**
(21) Anmeldenummer: 03002944.1
(22) Anmeldetag: 11.02.2003
(51) Int. Cl.: F01L 3/08, F01M 9/10, F16J 15/32

(54) **Ventilschaftdichtung für eine Brennkraftmaschine**
Valve stem seal for combustion engine
Joint d'étanchéité pour la tige de soupape d'un moteur à combustion interne

(30) Priorität: 21.02.2002 DE 10207382
(43) Veröffentlichungstag der Anmeldung: 27.08.2003
(73) Patentinhaber: Carl Freudenberg KG, 69469 Weinheim (DE)
(72) Erfinder: Arora, Michael, 10060 Roletto (IT)

(56) Entgegenhaltungen:
- EP-A- 0 332 350
- EP-A- 0 375 115
- EP-A- 1 087 108
- DE-A- 2 753 996
- DE-U- 9 000 671
- GB-A- 1 078 586

## Beschreibung

### Technisches Gebiet

Die vorliegende Erfindung befasst sich mit einer Ventilschaftdichtung für eine Brennkraftmaschine mit wenigstens einer den Ventilschaft umfassenden aus elastomerem Material bestehenden Dichtlippe.

Eines der Probleme bei Ventilschaftdichtungen ist die ausreichende Versorgung des Ventilschafts mit Schmieröl. Dabei ist die Menge des Schmieröls möglichst genau zu dosieren, da sowohl eine zu geringe Schmierung als auch ein Überangebot an Öl ungünstig ist.

### Stand der Technik

Eine Möglichkeit der Versorgung eines Ventilschafts mit Schmieröl ist in der US 4,125,265 dargestellt. Dort wird an der Ventilschaftführung eine Dichtung befestigt, die zwei Dichtlippen hat, welche einen Ringraum begrenzen, welcher der Ölaufnahme dient. Durch die Axialbewegung des Ventilschafts tritt eine Pumpwirkung ein, so dass das Schmieröl zwischen Ventilschaft und Ventilschaftführung gelangt. Die Wirksamkeit dieser Schmierung bzw. Abdichtung ist jedoch nicht voll befriedigend.

Eine andere Möglichkeit, den Schmiermitteldurchsatz zu steuern, zeigt das Gebrauchsmuster G 90 00 671.2. Hier werden in die Oberfläche des Ventilschafts kleine Öltaschen im Bereich des Dichtrings eingebracht, so dass hierdurch eine Schmierung des Ventilschafts ermöglicht wird. Diese Ausführungsform ist jedoch wenig befriedigend.

In der EP 1 087 108 A1 ist schließlich eine Ventilschaftabdichtung gezeigt, welche eine definierte Leckage am hin- und hergehenden Maschinenteil erlaubt und darüber hinaus eine zentrische Führung von Dichtlippe und Ventilschaft ergibt. Erreicht wird dieses dadurch, dass die innenliegende Bodenseite der Dichtlippe auf ihrem Umfang verteilt mit mehreren konzentrischen, eine unterbrochene Zentrierlippe bildenden Ringwulstabschnitten versehen ist, deren Innendurchmesser größer als der Innendurchmesser der Dichtlippe ist.

### Darstellung der Erfindung

Von dem oben genannten Stand der Technik ausgehend liegt der Erfindung die Aufgabe zugrunde, eine Ventilschaftdichtung zu finden, die im dynamischen Bereich eine ausreichende Schmierung des Ventilschafts ergibt und im statischen Bereich den Ventilschaft gut abdichtet. Es soll ein Minimum an Ölverlusten auftreten, die Leckrate soll stabil sein und auch niedrig über die gesamte Produktlebensdauer. Darüber hinaus soll durch die Dichtung bei Maschinenkonstruktionen mit sehr engen Toleranzen bei Inbetriebnahme der Brennkraftmaschinen ein höherer Schmiermittelfluss möglich sein als bei Normalbetrieb. Nach einer kurzen Einlaufzeit der Brennkraftmaschine soll die Leckage auf den gewünschten niedrigen Wert wieder reduziert sein.

Die Lösung der gestellten Aufgabe erfolgt bei einer Ventilschaftdichtung der eingangs genannten Art erfindungsgemäß dadurch, dass die Dichtlippe mit mehreren gleichmäßig auf ihrem Umfang verteilten und auf den Ventilschaft gerichteten Vorsprüngen versehen ist, deren Innendurchmesser kleiner ist als der Innendurchmesser der Dichtlippe. Durch diese Maßnahme wird die Dichtlippe geringfügig vom Ventilschaft entfernt und eine größere Ölmenge als für den Nomalbetrieb vorgesehen kann der Ventilschaftführung zugeführt werden. Die Vorsprünge sind so ausgebildet und angeordnet, dass sie die Dichtlippe nur abschnittsweise im Wirkungsbereich der Vorsprünge von dem Ventilschaft abheben. Durch die Anzahl und die Form der Vorsprünge kann der gewollte Durchsatz an Schmieröl sehr genau bestimmt werden.

Die Vorsprünge werden so ausgebildet, dass sie nach einer vorgegebenen Betriebszeit der Brennkraftmaschine abgerieben sind. Dieser Abriebvorgang wird durch die Materialauswahl vorbestimmt. Zusätzlich hat hierauf auch die Anzahl und die Form der Vorsprünge Einfluss. Bevorzugt werden die Vorsprünge kegelförmig ausgebildet, was zur Folge hat, dass bei zunehmendem Abrieb die Durchflussmenge des Öls sich verringert. Außerdem wird der Abriebvorgang selbst verlangsamt.

Die neue Ventilschaftdichtung ergibt eine erhöhte Leckrate, um eine ausreichende Schmierung während der Inbetriebnahme der Brennkraftmaschine zu garantieren. Nach einer kurzen Einlaufzeit wird die Leckrate auf den gewünschten Wert reduziert.

### Ausführung der Erfindung

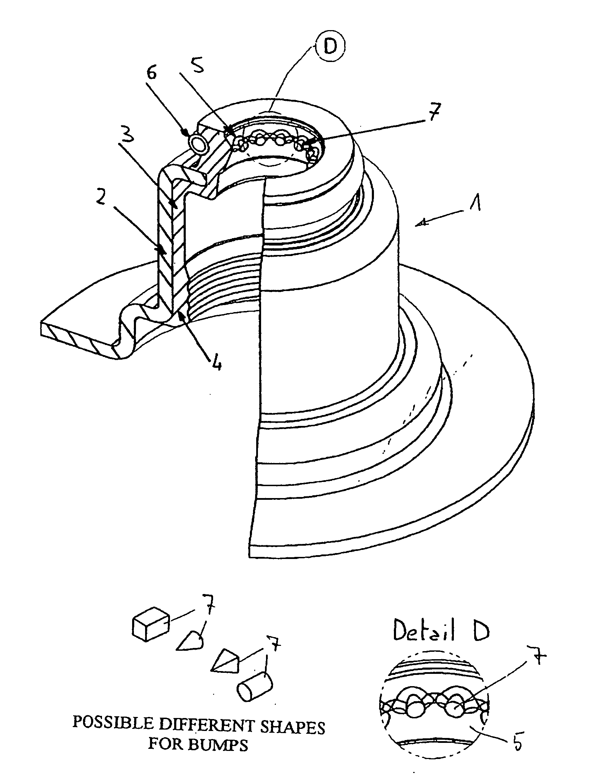

Anhand eines Ausführungsbeispiels wird in der beigefügten Figur die Erfindung näher erläutert.

Die Figur zeigt in der perspektivischen Darstellung teilweise im Schnitt eine Ventilschaftabdichtung 1. Die Ventilschaftdichtung 1 besteht aus einem Halteelement 2 aus Blech, an dem ein Dichtelement 3 befestigt ist. Das Dichtelement 3 wird aus einem polymeren Material hergestellt. Es hat eine statische Abdichtung 4 mit Ringwülsten, mit der es auf die nicht gezeigte Ventilschaftführung aufgesetzt wird. An ihrem oberen Ende hat die Dichtung 3 eine Dichtlippe 5, die im fertig montierten Zustand am Ventilschaft anliegt. Die Dichtlippe 5 kann zusätzlich noch durch die Ringspannfeder 6 angepresst werden. An der Dichtlippe 5 ist eine größere Anzahl von Vorsprüngen 7 vorhanden, deren Innendurchmesser gesehen mit Bezug zur Achse des Ventilschafts kleiner ist als der Innendurchmesser der Dichtlippe 5. Die Vorsprünge 7 können gesondert an die Dichtlippe 5 angespritzt oder direkt miteingepresst sein. Sie können aus einem Material, das einen geringeren Abriebwiderstand hat, als die Dichtlippe 5 selbst und/oder aus dem gleichen Material der Dichtlippe 5 sein.

Die Vorsprünge 7 können kegelförmig und/oder linear sein, wie im Detail D gezeigt. Möglich sind zylinderförmige, pyramidenförmige, kegelförmige und auch quaderförmige Ausgestaltungen der Vorsprünge 7.

## Patentansprüche

1. Ventilschaftdichtung für eine Brennkraftmaschine mit wenigstens einer, den Ventilschaft umfassenden, aus elastomerem Material bestehenden Dichtlippe, **dadurch gekennzeichnet, dass** die Dichtlippe (5) mit mehreren gleichmäßig auf ihrem Umfang verteilten und auf den Ventilschaft gerichteten Vorsprüngen (7) versehen ist, deren Innendurchmesser kleiner ist als der Innendurchmesser der Dichtlippe (5).

2. Ventilschaftdichtung für eine Brennkraftmaschine nach Anspruch 1, **dadurch gekennzeichnet, dass** die Vorsprünge (7) so ausgebildet und angeordnet sind, dass sie die Dichtlippe (5) nur abschnittsweise im Wirkungsbereich der Vorsprünge (7) von dem Ventilschaft abheben.

3. Ventilschaftdichtung für eine Brennkraftmaschine nach einem der Ansprüche 1 oder 2, **dadurch gekennzeichnet, dass** die Vorsprünge (7) nach einer vorgegeben Betriebszeit der Brennkraftmaschinen abgerieben sind.

4. Ventilschaftdichtung für eine Brennkraftmaschine nach Anspruch 3, **dadurch gekennzeichnet, dass** der Abriebvorgang durch die Anzahl und/oder Form der Vorsprünge (7) vorbestimmt ist.

5. Ventilschaftdichtung für eine Brennkraftmaschine nach einem der Ansprüche 3 oder 4, **dadurch gekennzeichnet, dass** der Abriebvorgang durch die Materialauswahl vor- bzw. mitbestimmt ist.

6. Ventilschaftdichtung für eine Brennkraftmaschine nach einem der Ansprüche 1 bis 5, **dadurch gekennzeichnet, dass** die Vorsprünge (7) kegelförmig und/oder linear ausgebildet sind.

## Claims

1. A valve-stem seal for an internal combustion engine, with at least one sealing lip surrounding the valve stem and consisting of elastomeric material, **characterized in that** the sealing lip (5) is provided with a plurality of projections (7) which are distributed uniformly on its circumference and are directed towards the valve stem and the inside diameter of which is smaller than the inside diameter of the sealing lip (5).

2. A valve-stem seal for an internal combustion engine according to claim 1, **characterized in that** the projections (7) are designed and arranged in such a way that they lift off the sealing lip (5) from the valve stem only partially in the effective range of the projections (7).

3. A valve-stem seal for an internal combustion engine according to either one of claims 1 and 2, **characterized in that** the projections (7) are abraded after a predetermined operating time of the internal combustion engines.

4. A valve-stem seal for an internal combustion engine according to claim 3, **characterized in that** the abrasive action is predetermined by the number and/or shape of the projections (7).

5. A valve-stem seal for an internal combustion engine according to either one of claims 3 and 4, **characterized in that** the abrasive action is predetermined or co-determined by the choice of material.

6. A valve-stem seal for an internal combustion engine according to any one of claims 1 to 5, **characterized in that** the projections (7) are designed conically and/or linearly.

## Revendications

1. Joint d'étanchéité pour la tige de soupape d'un moteur à combustion interne, comprenant au moins une lèvre d'étanchéité en matière élastomère qui entoure la tige de soupape, **caractérisé en ce que** la lèvre d'étanchéité (5) est pourvue de plusieurs saillies (7) réparties de manière uniforme sur sa circonférence et dirigées vers la tige de soupape, et dont le diamètre intérieur est inférieur au diamètre intérieur de la lèvre d'étanchéité (5).

2. Joint d'étanchéité pour la tige de soupape d'un moteur à combustion interne selon la revendication 1, **caractérisé en ce que** les saillies (7) sont exécutées et disposées de manière à ne soulever la lèvre d'étanchéité (5) de la tige de soupape que par segment dans la zone d'action des saillies (7).

3. Joint d'étanchéité pour la tige de soupape d'un moteur à combustion interne selon l'une des revendications 1 ou 2, **caractérisé en ce que** les saillies (7) sont usées par frottement au bout d'un temps de fonctionnement prédéfini des moteurs à combustion interne.

4. Joint d'étanchéité pour la tige de soupape d'un moteur à combustion interne selon la revendication 3, **caractérisé en ce que** le processus d'usure est prédéterminé par le nombre et/ou la forme des saillies (7).

5. Joint d'étanchéité pour la tige de soupape d'un moteur à combustion interne selon l'une des revendications 3 ou 4, **caractérisé en ce que** le choix du matériau prédétermine resp. contribue au processus d'usure.

6. Joint d'étanchéité pour la tige de soupape d'un moteur à combustion interne selon l'une des revendications 1 à 5, **caractérisé en ce que** les saillies (7) sont exécutées de manière conique et/ou linéaire.
